Europäisches Patentamt

European Patent Office

Office européen des brevets

(19)

(11) Numéro de publication: **0 142 058**
**A1**

(12)

# DEMANDE DE BREVET EUROPEEN

(21) Numéro de dépôt: 84112508.1

(22) Date de dépôt: 17.10.84

(51) Int. Cl.⁴: **B 60 B 25/18**
**B 60 B 25/22**

(30) Priorité: 25.10.83 FR 8317216

(43) Date de publication de la demande:
22.05.85 Bulletin 85/21

(84) Etats contractants désignés:
AT BE CH DE FR GB IT LI LU NL SE

(71) Demandeur: MICHELIN & CIE (Compagnie Générale des Etablissements Michelin) Société dite:
4 rue du Terrail
F-63000 Clermont-Ferrand(FR)

(72) Inventeur: Gergele, Jean
rue de Bellevue Saint-Hippolyte
F-63140 Chatel-Guyon(FR)

(74) Mandataire: Renaudie, Jacques et al,
Michelin & Cie Service K. Brevets
F-63040 Clermont-Ferrand Cédex(FR)

(54) Jante en plusieurs pièces comportant un cercle de blocage perfectionné.

(57) L'invention concerne les jantes en plusieurs pièces dont au moins un siège de bourrelet (2A) est amovible.

La section méridienne du cercle de blocage (5) est constituée d'une âme (51) munie de protubérances s'étendant radialement l'une (52) vers l'extérieur, l'autre (53) vers l'intérieur, destinées respectivement l'une (52), à positionner axialement le siège du bourrelet, l'autre (53) à assurer la solidarisation des pièces démontables (2A, 5) en s'engageant dans une rainure (6) ménagée à cet effet sur la virole (1).

FIG.1

EP 0 142 058 A1

Croydon Printing Company Ltd.

La présente invention a pour objet des perfectionnements apportés aux jantes en plusieurs pièces, destinées
plus particulièrement aux poids-lourds, aux camionnettes ou
aux véhicules de génie civil. Elle concerne plus spécialement
les jantes dont au moins un des sièges de bourrelet est
amovible et se rapporte plus particulièrement aux cercles
de blocage.

Les pièces amovibles sont usuellement retenues axialement par un cercle de blocage fendu. Lorsqu'il s'agit d'un
pneumatique sans chambre à air indépendante, un joint
d'étanchéité est logé dans l'espace compris entre l'anneau
servant de siège de bourrelet et la virole ou jante proprement dite.

On peut voir ces dispositions connues par exemple sur
le brevet FR 1 410 338. Une autre manière de réaliser la
retenue axiale de la ou des pièces amovibles est proposée par
le brevet GB 633 612 : on y voit une butée sous l'anneau
conique démontable, et un cercle de blocage où toutes les
surfaces d'appui sont radiales et reprennent des efforts
perpendiculaires.

Ces ensembles pneumatiques peuvent avoir à transmettre
des couples moteurs ou freineurs importants. Dans ce cas, il
se produit fréquemment une rotation relative des pièces de
ces jantes : l'ensemble constitué par l'enveloppe et le siège
de bourrelet tourne sur la virole avec pour conséquence une
mise à plat de l'enveloppe par arrachage du joint d'étanchéité
ou par détérioration de la chambre à air.

Diverses solutions tendant à remédier à ces déplacements relatifs ont déjà été proposées. On peut, comme décrit
dans le brevet FR 1 067 000, immobiliser l'anneau sur la jante

...

par un système de rainure et clavette. Cette méthode présente
le défaut de provoquer une concentration de contraintes
préjudiciable pour une utilisation optimale de la matière.
Elle est en outre coûteuse à réaliser. Le brevet US 3 623 530
propose de résoudre ce problème en ménageant une portée
tronconique entre l'anneau et le cercle de blocage, portée
tronconique caractérisée par un angle de 24° à 32° par
rapport à l'axe de la roue. Si cette disposition peut améliorer
la solidarisation de l'anneau démontable et du cercle de
blocage, elle est insuffisante pour empêcher tout glissement
périphérique du cercle de blocage sur la jante et donc de
l'enveloppe et des cercles amovibles sur la jante.

La jante proposée par la présente invention résoud
ce problème en obtenant un blocage circonférentiel des pièces
amovibles par frettage de ces pièces sur la jante, au moyen
d'un cercle de blocage de forme nouvelle.

La jante selon l'invention, du type en plusieurs pièces,
comportant au moins un des sièges de bourrelet séparable de
la jante proprement dite, comportant un cercle de blocage du
bord démontable, ledit cercle de blocage prenant appui sur la
jante dans une gorge ménagée sous le siège de bourrelet, est
remarquable en ce que la section méridienne du cercle de
blocage axial est constitué d'une âme dont l'axe principal
d'inertie est approximativement parallèle à l'axe de la roue,
munie de deux protubérances décalées axialement de manière
telle que la section de l'une soit hors du prolongement
radial de la section de l'autre, lesdites protubérances
s'étendant radialement l'une vers l'extérieur, l'autre vers
l'intérieur, destinées respectivement l'une à positionner
axialement le siège de bourrelet démontable, l'autre à
s'engager dans ladite gorge pour solidariser l'ensemble des
pièces démontables par frettage.

Selon une première caractéristique de l'invention,
l'épaisseur radiale d du cercle de blocage au niveau de ladite
protubérance s'étendant radialement vers l'intérieur est telle
que 2d est juste supérieur à la différence entre le diamètre
$\emptyset_s$ mesuré sous le siège de bourrelet et le diamètre $\emptyset_i$ mesuré
au bord radialement extérieur du fond de ladite gorge.

...

Selon une seconde caractéristique de l'invention, la face de l'âme radialement opposée à ladite protubérance s'étendant radialement vers l'intérieur comporte, en position de montage, une face d'appui tronconique.

De préférence, les deux protubérances sont disposées axialement aux extrémités de ladite âme.

D'autres détails d'exécution de l'invention vont être précisés avec la description des dessins qui ne représentent que quelques modes de réalisation préférables mais non limitatifs de l'invention.

La figure 1 montre une jante selon l'invention.

La figure 2 est une vue agrandie d'un cercle de blocage particulier.

La figure 3 montre une variante de réalisation de l'invention.

La figure 4 montre l'invention appliquée à un autre type de jante en plusieurs pièces.

La figure 5 montre l'invention appliquée à un montage sans chambre à air.

La figure 6 montre un cercle de blocage particulier pour un montage sans chambre à air.

La figure 7 est une coupe suivant la ligne AA' de la figure 6.

Dans la description et sur les dessins, les éléments identiques sont désignés par les mêmes références.

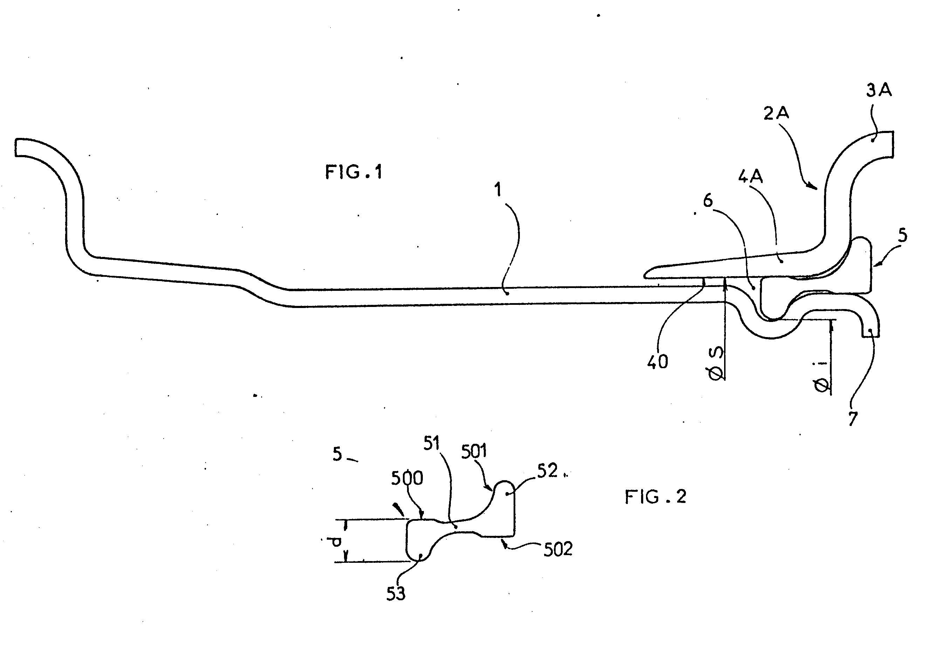

La jante selon l'invention, schématisée à la figure 1, est constituée par une virole (1), un bord latéral amovible(2A) comprenant un rebord (3A) et un siège (4A) de bourrelet, un cercle de blocage (5) qui peut être fendu afin de pouvoir être facilement introduit dans la gorge (6) ménagée dans la virole, sous le siège de bourrelet. Le cercle de blocage (5) est constitué d'une âme (51) approximativement parallèle à l'axe de la roue, et de deux protubérances décalées axialement, s'étendant l'une (52) radialement vers l'extérieur, l'autre (53) radialement vers l'intérieur et destinées l'une (52), à servir d'appui axial au bord latéral (2A) amovible, et l'autre (53), à s'engager dans la gorge (6) ménagée à cet effet dans la virole. De préférence, le bord (7) de la virole s'incurve

...

radialement vers l'intérieur afin d'améliorer la raideur du bord de la virole et de réaliser un appui pour les outils de démontage.

L'excellent blocage circonférentiel des pièces de cette jante est obtenu par frettage. La figure 1 montre une jante dont le siège (4A) de bourrelet présente une face intérieure (40) cylindrique. En conséquence, pour obtenir un frettage, l'épaisseur radiale (d) du cercle de blocage au niveau de la protubérance (53) est telle que 2d est juste supérieur à la différence entre le diamètre $\phi_s$ mesuré sous l'anneau du siège (4A) de bourrelet et le diamètre $\phi_i$ mesuré au bord radialement extérieur du fond de la gorge (6). D'une autre manière, le frettage peut être assuré en réalisant une face d'appui (41) tronconique sous le siège (4B) de bourrelet.

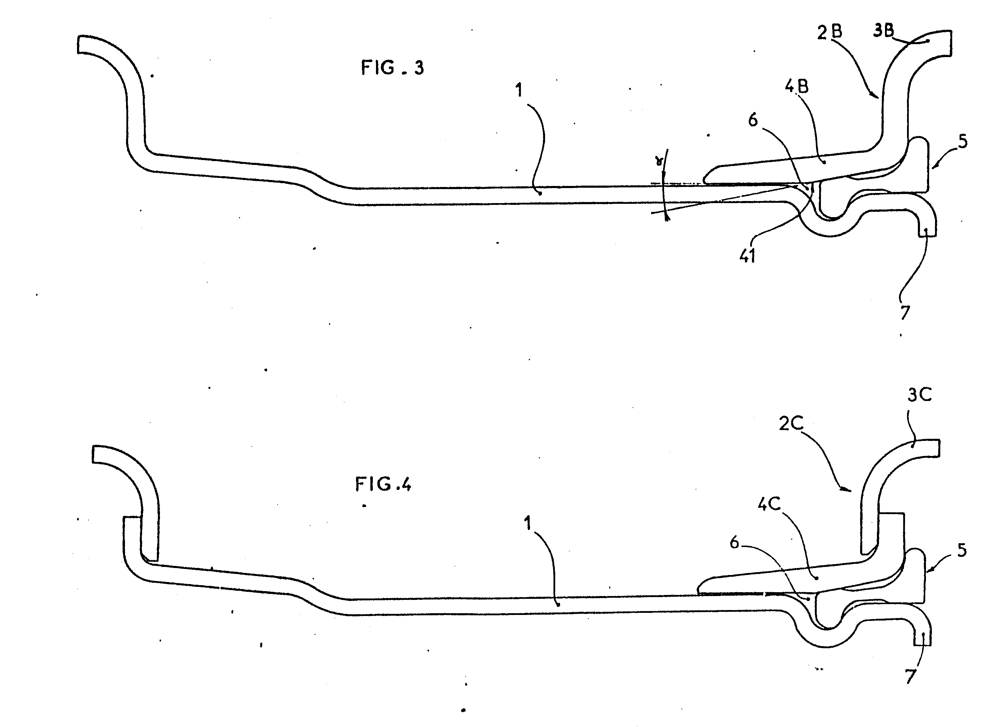

Cela est illustré à la figure 3 : on y voit une jante comportant un bord (2B) démontable, formant siège de bourrelet (4B) et rebord (3B). La face intérieure (41) du siège (4B) de bourrelet est tronconique. L'angle $\alpha$ est obligatoirement faible, de préférence inférieur à 20°. Il en résulte un serrage important des pièces (5) et (2B) sur la virole (1). Le bord latéral (2B) est retenu axialement par frettage sur la zone (500) du cercle de blocage (5) et, de préférence, par appui sur la portée (501). Après déformation, le cercle de blocage est fermement coincé dans la gorge (6) et la zone (502) peut également prendre appui sur la virole (1).

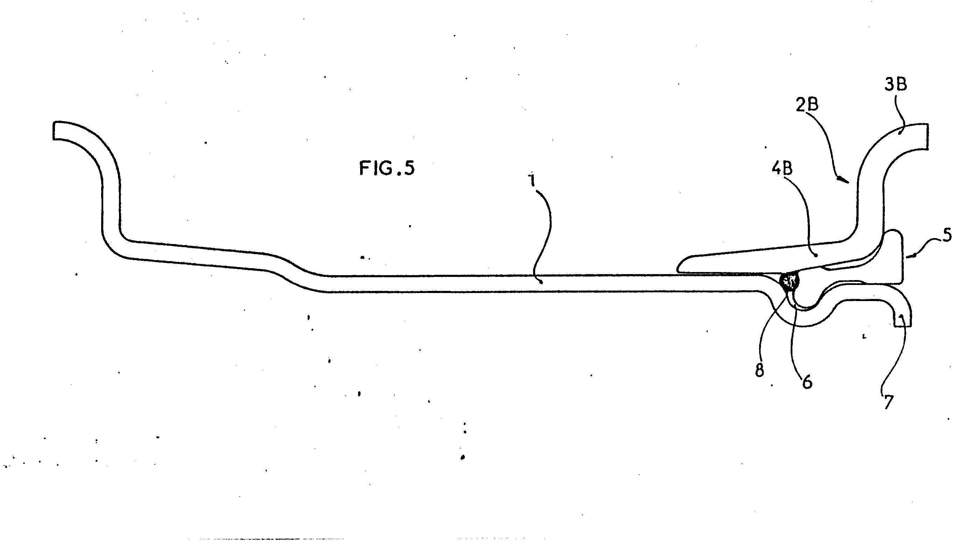

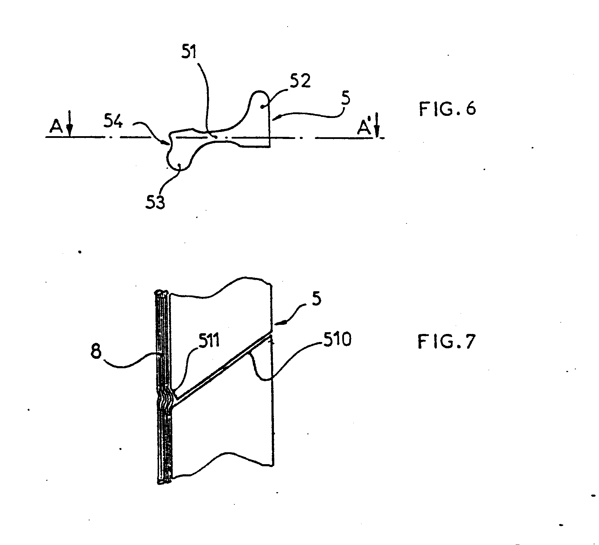

Les figures 5, 6 et 7 se rapportent à un montage sans chambre indépendante. La gorge (6) est assez large pour recevoir aussi un joint d'étanchéité (8) qui prend appui également dans une rainure (54) prévue à cet effet le long du cercle de blocage (5). Afin d'éviter toute dégradation du joint d'étanchéité (8), il peut être avantageux de fendre obliquement le cercle de blocage (5), de supprimer l'angle aigu, de sorte que l'on obtienne des faces (510) et (511) très inclinées, dépourvues d'arête agressive pour le joint (8).

...

Il est bien entendu que l'on peut, sans se départir de l'esprit de la présente invention, prévoir diverses modifications de détail, ou connues en soi. Ainsi, la figure 4 montre une jante dont les rebords sont amovibles des sièges de bourrelet. Dans ce cas, le bord latéral démontable (2C) est constitué d'un siège de bourrelet (4C), d'un rebord (3C) séparable du siège (4C). Le siège (4C) est conçu suivant les indications données ci-dessus. Les protubérances (52) et/ou (53) peuvent être supprimées en un ou plusieurs endroits de la circonférence. Le cercle (5) peut être en plusieurs arcs de cercle.

L'invention s'applique à toutes les jantes comportant au moins un siège de bourrelet démontable.

<u>REVENDICATIONS</u>

1. Jante en plusieurs pièces, comportant au moins un bord (2A, 2B) démontable comprenant un siège de bourrelet (4A, 4B) solidaire du rebord (3A, 3B), un cercle de blocage (5) du bord démontable, ledit cercle de blocage étant fendu transversalement et prenant appui sur la virole (1) dans une gorge (6) ménagée sous le siège de bourrelet (4A, 4B) caractérisé en ce que la section méridienne du cercle de blocage (5) est constitué d'une âme (51) dont l'axe principal d'inertie est approximativement parallèle à l'axe de la roue, munie de deux protubérances décalées axialement de manière telle que la section de l'une soit hors du prolongement radial de la section de l'autre, lesdites protubérances s'étendant radialement l'une (52) vers l'extérieur, l'autre (53) vers l'intérieur, destinées respectivement l'une (52) à positionner axialement le bord (2A, 2B) démontable, l'autre (53) à s'engager dans ladite gorge (6), l'épaisseur radiale d dudit cercle de blocage (5) au niveau de ladite protubérance (53) s'étendant radialement vers l'intérieur étant telle que 2d est juste supérieur à la différence entre le diamètre $\emptyset_s$ mesuré sous le siège de bourrelet et le diamètre $\emptyset_i$ mesuré au bord radialement extérieur du fond de ladite gorge (6), de sorte que l'ensemble des pièces démontables (2A, 2B et 5) est solidarisé sur la virole (1) par frettage.

2. Jante en plusieurs pièces, comportant au moins un bord (2A, 2B) démontable comprenant un siège de bourrelet (4A, 4B) solidaire du rebord (3A, 3B), un cercle de blocage (5) du bord démontable, ledit cercle de blocage étant fendu transversalement et prenant appui sur la virole (1) dans une gorge (6) ménagée sous le siège de bourrelet (4A, 4B) caractérisé en ce que la section méridienne du cercle de blocage (5) est constitué d'une âme (51) dont l'axe principal d'inertie est approximativement parallèle à l'axe de la roue, munie de deux protubérances décalées axialement de manière telle que la section de l'une soit hors du prolongement radial de la section de l'autre, lesdites protubérances s'étendant radialement l'une (52) vers l'extérieur, l'autre (53) vers l'intérieur, destinées respectivement l'une (52) à positionner axialement le bord (2A), 2B) démontable, l'autre (53) à s'engager dans ladite gorge (6), la face de l'âme radialement opposée à ladite protubérance (53) s'étendant radialement vers l'intérieur comportant, en position de montage, une face d'appui tronconique, de sorte que l'ensemble des pièces démontables (2A, 2B et 5) est solidarisé sur la virole (1) par frettage.

3. Jante selon la revendication 1 ou 2 caractérisée en ce que les protubérances (52) et (53) sont situées axialement aux extrémités de ladite âme (51).

4. Jante selon l'une des revendications 1 à 3 caractérisée en ce que le bord démontable (2C) comporte un rebord (3C) séparable du siège de bourrelet (4C).

5. Jante selon l'une des revendications 1 à 4 caractérisée en ce que le cercle de blocage (5) comporte une rainure (54) destinée à recevoir un joint d'étanchéité (8).

6. Jante selon l'une quelconque des revendications 1 à 5 caractérisée en ce que le cercle de blocage est constitué par au moins deux arcs de cercle.

7. Jante selon l'une quelconque des revendications 1 à 6 caractérisée en ce que l'une au moins des protubérances (52, 53) est supprimée en au moins un endroit de la circonférence.

FIG.1

3A

2A

4A

6

1

5

40

$\varnothing S$

$\varnothing i$

7

FIG.2

5

500

51

501

52

p

502

53

0142058

FIG . 3

FIG .4

0142058

FIG.5

FIG.6

FIG.7

Office européen
des brevets

## RAPPORT DE RECHERCHE EUROPEENNE

EP 84 11 2508

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-2 651 348 (MONETTE) <br> * Colonne 1, ligne 56 - colonne 2, ligne 55; figures 1,2 * | 1-5 | B 60 B 25/18 <br> B 60 B 25/22 |
| | --- | | |
| Y | FR-A-1 269 010 (PRINS) <br> * Page 1, colonne de droite, lignes 4-39; figures 1,2 * | 1,3 | |
| | --- | | |
| Y | FR-A- 740 508 (MICHELIN) <br> * Page 1, lignes 10-37; page 2, lignes 35-54; figure 1 * | 2,4 | |
| | --- | | |
| Y | US-A-2 929 431 (MUELLER) <br> * Colonne 2, lignes 55-59; figure 2 * | 5 | |
| | --- | | DOMAINES TECHNIQUES RECHERCHES (Int. Cl.4) |
| A | FR-A-1 080 891 (WINGFOOT) <br> * Page 3, colonne de gauche, ligne 20 - colonne de droite, ligne 13; figures 3-5 * | 1,3,4 | B 60 B 25 <br> B 60 B 11 |
| | --- | | |
| A | GB-A-1 310 774 (TSENTRALNOE) <br> * Page 1, lignes 43-45; figure 1 * | 2,4 | |
| | ----- | | |

Le présent rapport de recherche a été établi pour toutes les revendications

| Lieu de la recherche <br> LA HAYE | Date d'achèvement de la recherche <br> 08-02-1985 | Examinateur <br> AYITER I. |
|---|---|---|